# EUROPÄISCHE PATENTSCHRIFT

(11) **EP 1 495 995 B1**
(45) Veröffentlichungstag und Bekanntmachung des Hinweises auf die Patenterteilung: **20.12.2006**
(21) Anmeldenummer: 04016202.6
(22) Anmeldetag: 09.07.2004
(51) Int. Cl.: B65G 1/133

(54) **Lagersystem**
Storage system
Système de stockage

(30) Priorität: 11.07.2003 DE 10331741
(43) Veröffentlichungstag der Anmeldung: 12.01.2005
(73) Patentinhaber: Emmerling, Jens, 87700 Memmingen (DE)
(72) Erfinder: Emmerling, Jens, 87700 Memmingen (DE)
(74) Vertreter: Pfister, Stefan Helmut Ulrich

(56) Entgegenhaltungen:
- DE-C- 3 805 369
- GB-A- 2 202 814
- US-A- 3 218 986

## Beschreibung

Die Erfindung betrifft ein Lagersystem, bei welchem eine Mehrzahl von Lagereinheiten auf einer zumindest U-förmig oder teilweise beliebig gebogenen Transportbahn durch einen Antrieb beweglich angeordnet ist. Die Lagereinheiten sind jeweils zumindest entlang der geraden Transportbahnbereiche gleichartig parallel auf der Transportbahn angeordnet und die Lagereinheiten jeweils um im Wesentlichen rechtwinklige zur Transportbahn orientierte Schwenkachsen drehbar. Während des Bewegens der Lagereinheit in dem gebogenen Transportbahnbereich verbleibt die Lagereinheit im Wesentlichen gleichartig parallel zu der anderen Lagereinheit und schwenkt um die Schwenkachse der bewegten Lagereinheit.

Derartige Lager- und Zuführfördersysteme sind bekannt. Die meisten Lager- bzw. Zuführfördersysteme zeichnen sich dadurch aus, daß die Lagereinheiten beispielsweise als Gestelle oder Behälter vorgesehen sind, die an einem angetriebenen Förderer mit einer ovalen Förderbahn befestigt sind und in denen bestimmte Güter gelagert und transportiert werden können.

Die Lagereinheiten sind dabei in bestimmten Rastermaßen Breite x Länge ausgeführt. Dabei sind vorzugsweise Lagereinheiten 500 x 1.000 Millimeter oder 600 x 1.000 Millimeter in üblichen Lager- bzw. Zuführfördersystemen eingesetzt. Dabei ist es weiterhin bekannt, zumindest bei allen derzeit funktionierenden, leistungsfähigen Lagersystemen, die Lagereinheiten mit ihrer kürzeren Seiten, also der Breite, aneinandergereiht zu transportieren. Dies erfordert einen recht hohen Platzbedarf, so daß Überlegungen im Gange sind, die dazu führen, die Lagereinheiten mit ihrer längeren Seite aneinandergereiht (also querorientiert) zu transportieren.

Ein derartiges System ist aus der Druckschrift EP 0 571 658 B1 bekannt. Bei diesem System sind die Lagereinheiten querorientiert zur Transportbahn an dieser mittels eines dreieckförmigen Gestells befestigt. Die Lagereinheiten selbst sind dabei um eine Drehachse des Gestells drehbar. Beim Erreichen des Wendepunktes bzw. des Beschickungsbereiches ist es erforderlich, die Lagereinheiten aus ihrer dann in rechtwinkliger Position zu den anderen Lagereinheiten stehenden Position zu schwenken. Dazu wird die gesamte Lagereinheit an der an dem Befestigungsmittel vorhandenen Drehachse geschwenkt und gesichert. Erst dann kann ein Beschicken bzw. Kommissionieren durch die Bedienpersonen erfolgen.

Die Nachteile dieser Lösung liegen auf der Hand, nämlich darin, daß eine Drehbewegung im Zugriffsbereich notwendig ist, wozu eine sehr technisch aufwendige Dreheinrichtung an jeder Lagereinheit vorgesehen ist. Ein weiterer Nachteil ist dadurch angegeben, daß die Güter, die in der Lagereinheit gelagert sind, durch diese Schwenkbewegung derart beschleunigt werden, daß diese zum Beispiel umfallen oder herausfallen können. Dieser Gefahr kann durch eine langsamere Schwenkbewegung entgegengewirkt werden, jedoch geht dies zu Lasten der Gesamtgeschwindigkeit des Lagersystems. Die mittlere Zugriffsdauer auf das Lager steigt, dies führt zu erhöhten Kosten des Bedienpersonals, die länger zum Beispiel auf die zu entnehmenden Güter warten müssen.

Ein weiterer Nachteil des bekannten Transportsystems ist dadurch angegeben, daß der Bediener in den Sicherheitsbereich des Systems eintreten muß, um an das Transportsystem bzw. an das Regalsystem selbst gelangen zu können.

Aus der Patentschrift DE 38 05 369 C1 ist eine Regalanlage für die Bücher einer Bibliothek bekannt. Die dort vorgestellte Lösung bezieht sich auf ein Regal- bzw. Umlaufsystem für Bücher einer Bibliothek mit umlaufenden Regalen und mit in diesen angeordneten Aufnahmen für die Bücher. Die Lösung selbst beschäftigt sich im Wesentlichen mit der Lösung der Aufgabe, wonach die Zugriffszeit zu den einzelnen Büchern relativ gering sein soll und bei welcher zur Entnahme und zum Zurückstellen eines einzelnen Buches nur eine relativ geringe Anzahl von Büchern bewegt werden muß, so daß die Energiekosten gering gehalten werden. Die Lagereinheiten der Regalanlage sind ebenfalls quer orientiert zur Transportbahn an dieser geführt. Die Umlenkung erfolgt mittels eines äußerst komplizierten Umlenkmechanismus.

Aus der US-PS 3,218,986 ist ein Lagersystem bekannt, bei dem auf einer Führungsbahn Lagereinheiten zueinander parallel angeordnet verfahrbar sind, wobei im Kurvenbereich die Lagereinheiten in einer Lage zueinander parallel verbleiben. Um dies zu erreichen, sind zusätzlich zu der Transportbahn zwei Lenkführungen vorgesehen, die über Lenkschwingen mit der Lagereinheit verbunden sind. Um zu vermeiden, dass die Lagereinheit im Kurvenbereich der Transportbahn geschwenkt wird, sind zusätzliche Führungen vorgesehen, die die Lagereinheit in eine Lage parallel zueinander halten.

Ausgehend von dem zuvor genannten Stand der Technik ist es Aufgabe der Erfindung ein Lagersystem zur Verfügung zu stellen, bei dem die zuvor beschriebenen Nachteile nicht mehr vorhanden sind.

Die Erfindung geht von dem oben beschriebenen Stand der Technik aus und schlägt ein Lagersystem vor, bei welchem eine Mehrzahl von Lagereinheiten auf einer zumindest U-förmig ausgebildeten oder teilweise beliebig gebogenen Transportbahn durch einen Antrieb beweglich angeordnet ist und die Lagereinheiten jeweils zumindest entlang der geraden Transportbahnbereiche gleichartig parallel auf der Transportbahn angeordnet sind und die Lagereinheiten jeweils um im Wesentlichen rechtwinklige, zur Transportbahn orientierte Schwenkachsen drehbar sind und während des Bewegens der Lagereinheit in den gebogenen Transportbahnbereich die Lagereinheit im Wesentlichen gleichartig parallel zu der anderen Lagereinheit verbleibt und um die Schwenkachse der bewegten Lagereinheit schwenkt, welche sich dadurch auszeichnet, dass eine Führungseinrichtung von wenigstens eine Lenkführung gebildet ist, die Lenkführung und die Transportbahn im wesentlichen parallel zueinander angeordnet sind und eine Lenkführung auf dem gleichen Niveau vorgesehen ist. Es erfolgt also erfindungsgemäß eine parallelorientierte Bewegung, ohne daß die gesamte Lagereinheit um den Radius des Transportsystems bzw. der Transportbahn geschwenkt werden muß, sondern die Lagereinheit verbleibt immer parallel zu den anderen Lagereinheiten orientiert und insbesondere auch so orientiert, daß die Regalfelder quer zur Transportbahn auch im Schwenkbereich verbleiben.

Damit ist insbesondere eine querorientierte Anordnung der Lagereinheit auf bzw. an der Transportbahn möglich.

Bereits durch diese Lösung sind die technischen Nachteile des Standes der Technik behoben, nämlich derart, daß durch das im Wesentlichen parallele zu den übrigen Lagereinheiten Bewegen der zu schwenkenden Lagereinheit, nunmehr eine wesentlich höhere Transportgeschwindigkeit des gesamten Systems möglich ist, da in dem Schwenkbereich die bei dem Stand der Technik nachteiligen Fliehkräfte nicht mehr auftreten. Zum weiteren wird eine Platzersparnis nicht nur durch die Anordnung querorientiert auf den geraden Transportbahnbereichen erreicht, sondern auch in gleicher Weise insbesondere in den gebogenen Transportbahnbereichen. Dort ist ein Verdrehen aus der längsorientierten Stellung in die querorientierte Stellung nicht mehr notwendig, so daß allein der Platz, der durch den Unterschied zwischen Länge und Breite der Lagereinheit gegeben ist, hier eingespart wird. Die Einsparung bezüglich der gesamten Lagereinheit durch die querorientierte Anordnung aller Lagereinheiten wurde bereits beschrieben. Nunmehr steht sie nutzbar in einem technisch funktionierenden Lagersystem mit querorientierten Lagereinheiten zur Verfügung. Es wird weiterhin ermöglicht, daß die Bedienpersonen die Lagereinheit bzw. den Bedienbereich der Lagereinheit erreichen können, ohne in den Sicherheitsbereich innerhalb der gebogenen Transportbahnbereiche eintreten zu müssen. Dies ist ebenfalls durch die jetzt ermöglichte Orientierung des Systems in Querlage während des Schwenkens jetzt technisch mit vertretbarem Aufwand realisierbar.

Ein besonderer Vorteil ist augenscheinlich. Gegenüber dem Stand der Technik entfällt der erhebliche Aufwand für die Anordnung von Trag- und Schwenksystemen an dem Transportsystem selbst bzw. an der Transportbahn. So ist es nicht mehr notwendig, die Lagereinheit drehbar auf einem Gestell anzuordnen und eine aufwendige Dreh- und Blockiervorrichtung vorzusehen. Dieser Aufwand entfällt bei der erfindungsgemäßen Lösung, wie zuvor beschrieben.

Im Vergleich mit der Lösung nach der Druckschrift DE 38 05 369 wird ein wesentlich günstiger Umlenkmechanismus zur Verfügung gestellt, der in dieser Lösung auch nicht konkret beschrieben ist, so daß nur vermutet werden kann, wie dies technisch erfolgt. So zeigen beispielsweise die Figuren Prinzipdarstellungen der Funktionsweise dieses Umlenkmechanismus. Dabei ist zu vermuten, daß an den Umlenkstellen des Regalsystems in Art von Laufkatzen ausgebildete Transporteinrichtungen an der Umlaufbahn eingreifen, um beispielsweise zwei Regaleinheiten erfassen zu können. Die Laufkatzen müssen sich dann entlang einer zusätzlichen Verschiebeebene, die quer orientiert zur Regalbewegung insgesamt verläuft, bewegen, um einen synchronisierten Ablauf der Drehbewegung zu gewährleisten. In der Druckschrift ist lediglich angedeutet, wie dies erfolgen könnte, jedoch ist dies nicht technisch ausgeführt. Ersichtlich ist aus allen Darstellungen, daß der Abstand zwischen dem Ende der Parallelführung bis zur Be- bzw. Entladestelle für die Bücher sehr groß ist. Damit wird auch das Beschicken der einzelnen Regalsektionen relativ kompliziert, das heißt, es muß mit hohem technischen Aufwand, beispielsweise durch eine Verladestation, wie in der Druckschrift angedeutet, realisiert werden. Die Lösung ist daher erheblich aufwendiger als die jetzt erfindungsgemäß vorgeschlagene Lösung, die den Aufwand der gesamten Regaleinheit erheblich reduziert. Insbesondere wird ein technischer Aufwand eingespart, wie er für die Umlenkung der einzelnen Regalsektionen an den Enden der Regaleinheit erforderlich ist. Im Weiteren wird der Platzbedarf für den Umlenkbereicht durch die erfindungsgemäße Lösung weiter reduziert und ein Lagersystem zur Verfügung gestellt, bei dem insbesondere der Be- bzw. Entladebereich platzmäßig relativ gering gehalten werden kann, wodurch sich die Umlaufgeschwindigkeit insgesamt verbessert. Die Zugriffszeiten auf das erfindungsgemäße Lagersystem sind im Vergleich zu der Lösung nach dem Stand der Technik erheblich verringert. Zudem erscheint die aus dem Stand der Technik nach der DE 38 05 369 bekannte Lösung nur für ein Bücherregalsystem geeignet zu sein.

Eine vorteilhafte Weiterbildung des Lagersystems zeichnet sich dadurch aus, daß zumindest eine Führungseinrichtung vorgesehen ist, die im Zusammenwirken mit der Transportbahn und an den Lagereinheiten angeordneten Führungsmittel im gebogenen Transportbahnbereich und/oder im Zugriffsbereich die Lagereinheiten ebenfalls parallel orientiert transportiert. Mittels einer Führungseinrichtung ist es möglich, die Lagereinheiten parallel, insbesondere in dem gebogenen Transportbahnbereich zu transportieren. Dies geschieht in einfachster Weise, beispielsweise durch eine mittels eines Zapfens oder einer Rolle geführten Lagereinheit, die auf einer Führungseinrichtung geführt ist, bestehend aus einer Schiene oder dergleichen. Dies ist eine sehr einfache Ausführungsform der Erfindung und ermöglicht eine preisgünstige Ausgestaltung des erfindungsgemäßen Lagersystems.

Ein weiterer Aspekt der Erfindung ist dadurch angegeben, daß die Führungseinrichtung aus wenigstens einer Lenkführung und wenigstens einer an jeder der Lagereinheiten und an der Transportbahn gelenkig angeordneten Lenkschwinge gebildet ist. Man hat neben der Transportbahn jetzt noch eine Lenkführung. In der Lenkführung ist die Lagereinheit praktisch an einer weiteren Stelle geführt und zwar derart, daß die parallele Orientierung im gebogenen Transportbahnbereich erhalten bleibt. Hierzu genügt es beispielsweise eine Lenkschwinge an der Transportbahn anzuordnen, die dann drehbar an einer Lagereinheit selbst befestigt ist.

Günstigerweise ist wenigstens je eine Lenkführung oberhalb und unterhalb der Lagereinheiten vorgesehen. Dies verbessert die gesamte Anlage hinsichtlich des schonenden und verrutschungsfreien Transports des Transportgutes durch die Reduzierung der Fliehkräfte an den Regalfeldern. Durch die Führung oberhalb und unterhalb ist eine vergleichsweise höhere Belastung des Systems möglich als bei herkömmlichen Lagersystemen.

Eine vorteilhafte Weiterbildung der Erfindung sieht vor, daß wenigstens zwei Lenkschwingen je Lagereinheit vorgesehen sind, die an der Transportbahn, insbesondere im gebogenen Transportbahnbereich, aufeinanderzu- bzw. voneinanderwegbewegbar sind und die an der Lagereinheit eine gemeinsame Drehachse besitzen. Die Ausbildung mit zwei Lenkschwingen, die insbesondere im gebogenen Transportbahnbereich aufeinanderzu- bzw. voneinanderwegbewegbar sind ist von Vorteil, da damit ein Schwenken der Lagereinheit in dem gebogenen Transportbahnbereich mit minimalsten Platzaufwand passieren kann. Indem der Radius der Transportbahn in dem gebogenen Transportbahnbereich so gewählt wird, daß die Längsschwingen sich aufeinander zwangsweise im Zusammenwirken mit der Führung aufeinanderzubewegen, wird die Lagereinheit auch beabstandet an dem Ende der geraden Transportbahn vorbeigeführt. Insofern ist es von Vorteil, eine derartige Lösung mit wenigstens zwei Längsschwingen je Lagereinheit vorzusehen.

Für den Transport bzw. die Ablage der Lagereinheiten in einem Lagersystem wie beispielsweise einem Hochregallager ist es von Vorteil, wenn die Lagereinheiten an die Transportbahn an- bzw. abkoppelbar ausgebildet sind. Wenn die Lagereinheiten beispielsweise durch die Transportbahn an dem Hochregal an einer bestimmten Stelle positioniert sind, kann mit Hilfe dieser An- bzw. Abkoppelungseinrichtungen die Lagereinheit in das Hochregallager eingeschoben bzw. von dort wieder an die Transportbahn herausgeholt werden, wenn diese benötigt wird.

Dazu ist es selbstverständlich von Vorteil, wenn die Lagereinheiten und die Transportbahn Schnittstellen zum Ein- bzw. Auskoppeln aufweisen. Als Schnittstellen können dabei alle im Maschinenbau bzw. in Transportsystemen bekannte Schnittstellen verwendet werden. Diese können mechanisch und/oder elektrisch bzw. magnetisch gesteuert sein.

Erfindungsgemäß wurde gefunden, daß es von Vorteil ist, wenn die Lenkführung und die Transportbahn im Wesentlichen parallel zueinander angeordnet sind. Die parallele Anordnung von Lenkführung und Transportbahn gewährleistet in sehr einfacher Weise einen parallelen Transport insbesondere in dem gebogenen Transportbahnbereich. Dabei ist es von Vorteil, wenn die Transportbahn als Transportführung insbesondere schienenartig ausgebildet ist.

Eine vorteilhafte Weiterbildung der Erfindung sieht vor, daß Längsschwingen sowohl zwischen Transportbahn und Lagereinheit als auch zwischen der Lenkführung und der Lagereinheit angeordnet sind. Dies gewährleistet einen hohen sicheren Betrieb im gebogenen Transportbahnbereich.

Die Lenkführung kann dabei als Leitschiene oder dergleichen entsprechend einer vorteilhaften Weiterbildung der Erfindung ausgebildet sein.

Erfindungsgemäß ist es selbstverständlich auch vorgesehen, daß mehrere Lagereinheiten regalförmig übereinander bzw. in einem Regalfeld angeordnet sind und die Transportbahn und die Führungseinrichtung zumindest an der oberen bzw. unteren Lagereinheit des Regalfeldes bzw. an dem Regalfeld selbst angreifen. Diese Ausführungsform ist sehr platzsparend und insbesondere geeignet, in Hochregallagern oder größeren Lagereinheiten eingesetzt zu werden. Insbesondere dann, wenn Regalfelder längere Zeit in einem Hochregallager ohne umlaufende Transporteinrichtung untergebracht sind, ist diese Lösung von Vorteil. Sie ist auch insbesondere deshalb von Vorteil, weil neben der Platzersparnis, welche durch die querorientierte Anordnung der Lagereinheiten erreicht wird, nunmehr eine weitere Platzersparnis durch das Anordnen von Lagereinheiten in Form von Regalsystemen übereinander resultiert.

Dabei ist es von Vorteil, wenn das Regalfeld selbst einen Rahmen umfaßt, der mehrere Lagereinheiten aufnimmt und dieser Rahmen dann die Führungs- und Transportmittel aufweist, die mit der Transportbahn und mit der Führungseinrichtung zusammenwirken.

Von Vorteil ist es auch, wenn der Zugriffsbereich für das Bestücken bzw. das Entnehmen von Waren bzw. Gütern aus den Lagereinheiten mit einer Schutzverkleidung versehen ist. Die Schutzverkleidung ist dabei entsprechend einer vorteilhaften Weiterbildung der Erfindung mit einer Bedienöffnung versehen, die mittels einer Sicherungseinrichtung beispielsweise einer Sicherheitstür verschließbar ist. Dabei ist es von Vorteil, wenn, bedingt durch die parallele Umsetzung bzw. Umführung der Lagereinheiten, die Lagereinheit so dicht an die Bedienöffnung herangefahren wird, daß zwischen den Kanten, welche zu der Schutzverkleidung hinweisen und der Schutzverkleidung selbst, nur noch ein sehr kleiner vernachlässigbarer Abstand besteht. Dieser Abstand kann theoretisch bei hoher Einhaltung von Genauigkeitsmaßstäben auf Null eingestellt werden. Dies ist erst durch die Parallelführung am Scheitel der Transportbahn bzw. im gebogenen Transportbahnbereich ermöglicht. Bedingt durch diese Anordnung der Lagereinheit in dem Bedienbereich wird die Greiftiefe für die Bedienperson in die Lagereinheit verbessert. Durch die marginale Anordnung wird das Beschicken bzw. das Entnehmen von zu transportierenden bzw. zu lagernden Gütern wesentlich vereinfacht.

Erfindungsgemäß ist es auch vorgesehen, daß die Breite der Bedienöffnung der Breite der Lagereinheit entspricht. Damit werden Verletzungen in diesem Bereich komplett verhindert. Auch hierin ist ein wesentlicher Unterschied gegenüber den Lösungen nach dem Stand der Technik zu sehen, wo eine randorientierte Anordnung der Lageranordnung an der Schutzverkleidung nicht möglich ist.

Entsprechend einer vorteilhaften Weiterbildung der Erfindung ist die Bedienöffnung im gebogenen Transportbahnbereich und/oder im Zugriffsbereich parallel zu der Breite der Lagereinheiten angeordnet. Dies ist eine bevorzugte Variante. Sie schließt jedoch nicht aus, daß durch eine spezielle Ausbildung der Lenkführung im Zugriffsbereich eine winklige bzw. schräge Anordnung der Bedienöffnung mit Bezug auf die Längstransportrichtung der Transportbahn ermöglicht ist.

Die Erfindung schlägt auch vor, daß der Antrieb über wenigstens ein Antriebselement mit den Lagereinheiten und/oder den Regalfeldern verbunden ist. Das Antriebselement kann dabei entsprechend einer Weiterbildung der Erfindung als Kette, als Seilzug, als Zahnriemen, als Zahnkette, als Gummiaugenkette oder dergleichen ausgebildet sein. Hierin ist die Erfindung in keinster Weise beschränkt.

Erfindungsgemäß ist es weiter vorgesehen, daß ebenso wie das Antriebselement, das Führungselement von dem Antrieb angetrieben wird. Entsprechend einer vorteilhaften Weiterbildung ist es dabei insbesondere vorgesehen, daß sowohl das Antriebselement für die Transportbahn als auch das Führungselement für die Führungsbahn von dem Antrieb gemeinsam angetrieben werden. Hierzu ist es lediglich notwendig, die Antriebsgeschwindigkeit der Transport- und der Führungsbahn entsprechend zu synchronisieren.

Die Erfindung sieht auch vor, daß der Antrieb für einen Reversierbetrieb ausgebildet ist. Dieser Reversierbetrieb ist insbesondere von Vorteil, da dadurch immer die kürzesten Wege für die Lagereinheit gewählt werden können. Es muß nicht, beispielsweise bei einer karussellartigen Anordnung der Lagereinheiten an der Transportbahn, erst eine ganze Umdrehung gefahren werden, um die Lagereinheit an einer vorbestimmten Stelle zu positionieren. Der Reversierbetrieb ermöglicht, die Bewegungsrichtung der Transportbahn zu ändern und die Lagereinheit auf dem kürzesten Weg zu der vorbestimmten Stelle in einem Hochregallager beispielsweise anzuordnen. Dies dient insbesondere der Streckenoptimierung. Ein derartiger Reversierbetrieb ist erst durch die jetzt vorgestellte Lösung des erfindungsgemäßen Lagersystems sinnvoll ermöglicht, da alle anderen bisher bekannten Lösungen einen derartigen Reversierbetrieb in der zuvor beschriebenen Weise noch nicht rationell betreiben können.

Von besonderem Vorteil ist es, wenn eine Steuerung vorgesehen ist, mittels derer der Antrieb und/oder die Lagereinheit steuerbar ist/sind. Gerade im Zusammenhang mit der zuvor beschriebenen Streckenoptimierung ist das Zusammenspiel von Steuerung und Antrieb eine sehr wichtige Maßnahme. Diese wird erfindungsgemäß auch an dem Lagersystem eingesetzt. Die Steuerung im Zusammenwirken mit dem Antrieb dient dabei insbesondere auch der Streckenoptimierung der Bewegung der Lagereinheit zu der Bedienöffnung. Sie dient auch der Optimierung der umgekehrten Bewegung von der Bedienöffnung zu einem Lagerort in dem Lagersystem selbst.

Von Vorteil ist es weiterhin, wenn die Steuerung derart ausgebildet ist, daß sie die Lage der Lagereinheiten erkennt und beim Abrufen den jeweils kürzesten Weg zum Zugriffsbereich bzw. zur Bedienöffnung auswählt. Dies ist beispielsweise an den an den Lagereinheiten und an der Transportbahn angeordneten Sensoren erkennbar, die der Steuerung anzeigen, wo eine jeweils gesuchte Lagereinheit sich gerade befindet. Dann kann die Steuerung den kürzesten Weg zum Zugriffsbereich und/oder zum jeweiligen Lagerort auswählen.

Hierzu ist es von Vorteil, wenn entsprechend einer Weiterbildung der Erfindung an der Lagereinheit wenigstens eine Codierung, zum Beispiel ein Barcode zugeordnet ist, die von der Steuerung erkennbar ist.

Erfindungsgemäß wurde auch gefunden, daß es von Vorteil ist, wenn die Steuerung mit Schnittstellen versehen ist, die zu Lagerverwaltungsrechnern und zu gesteuerten Kommissioniersystemen verbindbar sind. Damit lassen sich die Vorteile derartiger Lagerverwaltungsrechner bzw. Kommissioniersysteme wesentlich effektiver als bisher bei bekannten Lagersystemen einsetzen.

Die Erfindung schlägt auch ein Lagersystem, gebildet aus wenigstens zwei Transportbahnen nach einem oder mehreren der vorhergehenden Ausführungsformen des Lagersystems vor.

Die Erfindung wird nachfolgend anhand von Ausführungsbeispielen und Zeichnungen weiter beschrieben.

Es zeigen:
- Fig. 1: Seitenansicht eines Lagersystems nach der Erfindung;
- Fig. 2: Draufsicht eines Lagersystems nach Fig 1;
- Fig. 3: Vorderansicht eines Lagersystems nach der Fig. 1;
- Fig. 4: Detail einer Ausführung der Lenkführung;
- Fig. 5: Schematische Darstellung der parallelen Anordnung mehrerer Lagersysteme nach der Erfindung;
- Fig. 6a und b: Details der Ausbildung der Bedienöffnung nach dem Stand der Technik und nach der Erfindung;
- Fig. 7a und b: Kombination des Lagersystems nach der Erfindung mit einem Vertikal-Regal-Bediengerät.

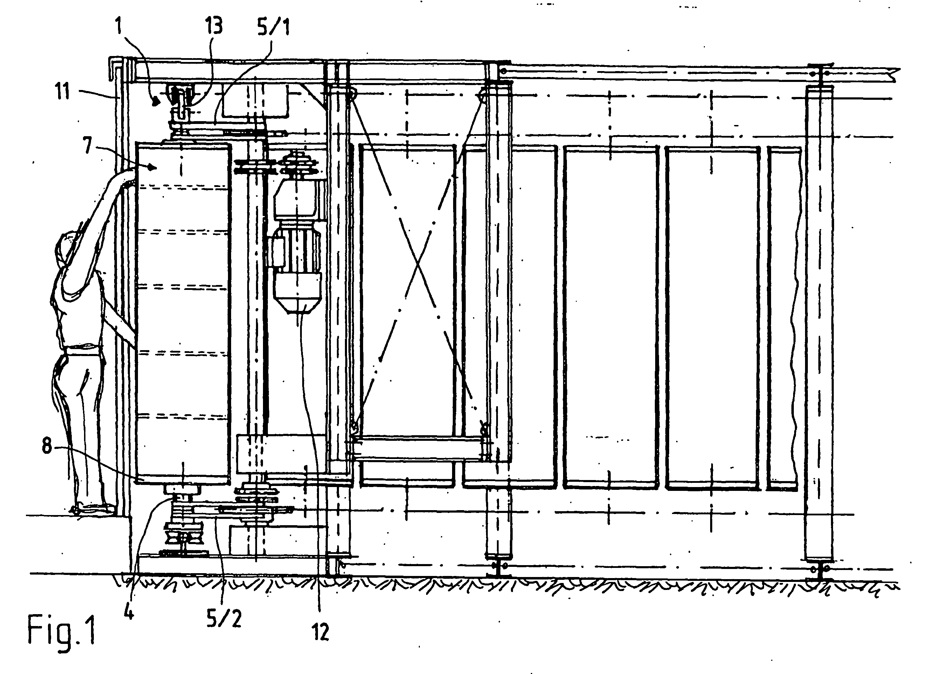

Die Fig. 1 zeigt eine Seitenansicht eines Lagersystems nach der Erfindung. Hierbei sind nur die erfindungswesentlichen Merkmale bezeichnet. Das gesamte Lagersystem ist einem nicht näher bezeichneten Gestell angeordnet. Dabei ist die Transportbahn 1 im oberen Bereich des Gestells befestigt. Die Transportbahn 1 ist beispielsweise mit einem Antriebselement 13 versehen, welches über wenigstens eine Lenkschwinge (5/1) im oberen Bereich und über eine weitere Lenkschwinge (5/2) im unteren Bereich sowohl mit der Transportbahn 1 als auch mit der Lenkführung 4 verbunden ist. Die Lenkführung 4 ist schienenartig ausgebildet. Details dieser schienenartigen Ausbildung werden später noch beschrieben. In dem Gestell für die Lagereinheit selbst ist ein Antrieb 12 vorgesehen, welcher mit einem Getriebe ausgestattet ist und mit Wellen zum Antrieb der Transportbahn sowie zum Antrieb der Lenkführung 4. Bei der Ausführungsform, die in der Fig. 1 dargestellt ist, treibt der Antrieb synchrongesteuert sowohl die Transportbahn 1 als auch die Lenkführung 4 an. Dazu befinden sich ebenfalls nicht näher bezeichnete Lagerblöcke und Getriebe in dem Gestell. Zwischen der Transportbahn 1 und der Lenkführung 4 ist ein Regalfeld 7 angeordnet, welches von einem Rahmen 8 umfasst ist. In dem Regalfeld 7 sind die in dieser Fig. nicht dargestellten Lagereinheiten 2 dann im Betrieb angeordnet. Gemäß der Ausführungsform der Fig. 1 können in dem Regalfeld 7 insgesamt sechs Lagereinheiten 2 übereinander angeordnet werden. Die Bedienperson ist an der linken Seite der Darstellung abgebildet. Vor der nicht näher bezeichneten Bedienöffnung befindet sich eine Sicherheitstür 11. Diese Sicherheitstür 11 ist entweder an dem nicht bezeichneten Gestell bzw. an einer in dieser Fig. nicht dargestellten Schutzverkleidung angeordnet.

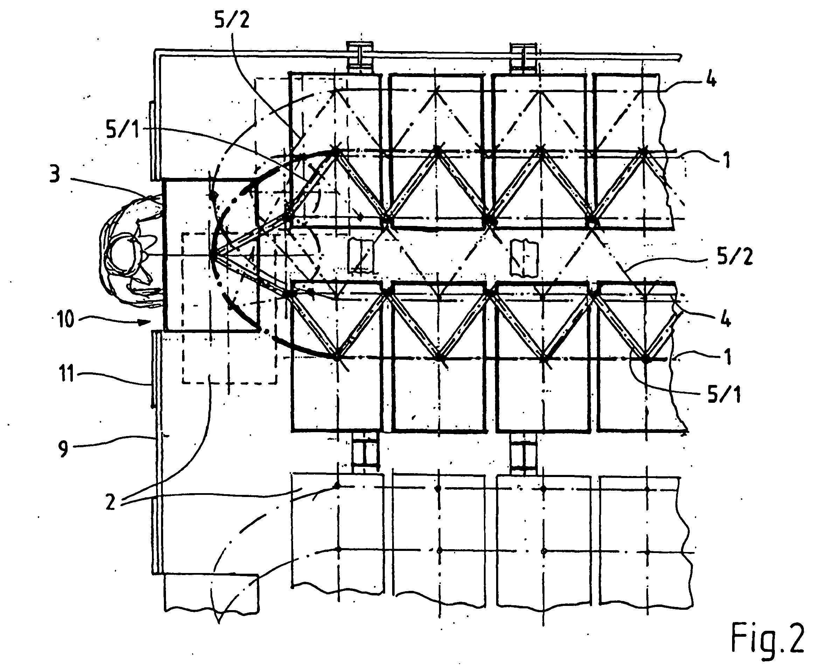

Die Fig. 2 zeigt eine Draufsicht eines Lagersystems nach der Fig. 1 und eine spezielle Ausführungsform nach der Erfindung. In dieser Darstellung werden sehr schön die Vorzüge der erfindungsgemäßen Ausführung des Lagersystems deutlich. Parallel zueinander bzw. im wesentlichen parallel zueinander sind hierbei die Transportbahn 1 und die Lenkführung 4 angeordnet. Zwischen der Transportbahn 1 und der Lagereinheit 2 ist jeweils eine zweiteilige Lenkschwinge 5/1 angeordnet. Die Lenkschwinge 5/1 ist dabei sowohl drehbar an der Transportbahn 1 als auch an der Lagereinheit 2 befestigt. Die Lenkschwinge ist etwa dreieckförmig angeordnet und ist insbesondere in dem gebogenen Transportbahnbereich der Transportbahn 1 dann derart ausgeführt, daß die beiden Dreh- bzw. Schwenkpunkte an der Transportbahn sich aufeinander zu- bzw. von einander wegbewegen können. Erst dadurch wird eine parallelorientierte Bewegung der Lagereinheit 2 ermöglicht. An der Lenkführung 4 sind (gestrichelt dargestellt) ebenfalls Lenkschwingen 5/2 vorgesehen. Diese sind unterhalb des Regalsystems bzw. der Lagereinheit 2 angeordnet. Aus diesem Grunde ist die gestrichelte Linienform gewählt. Durch die Anordnung weiterer Lenkschwingen 5/2 an der Lenkführung 4 wird eine äußerst sichere Führung in dem gebogenen Transportbahnbereich erreicht. Insbesondere wird deutlich, daß die Schutzverkleidung 9 soweit an die Lagereinheit 2, welche sich genau im Scheitelpunkt der gebogenen Transportbahn 1 befindet, herangeführt werden kann. Hierbei wird sowohl eine Platzersparnis erreicht als auch gleichzeitig eine Erhöhung der Sicherheit für die Bedienpersonen. Zusätzlich zur weiteren Erhöhung der Bediensicherheit ist an der Bedienöffnung 10 eine Sicherheitstür 11 angeordnet, welche beispielsweise als Schiebetür ausgeführt werden kann und die während des Umlaufens der der Lagereinheiten 2 geschlossen wird. Es ist jedoch auch sehr schön ersichtlich, daß die Bedienperson nicht in den Schwenkbereich bzw. den Sicherheitsbereich eintreten muß, um die Lagereinheit 2 zu bedienen. In gleicher Weise wird durch die Darstellung gemäß der Fig. 2 verdeutlicht, daß der Schleudereffekt beim Drehen der Lagereinheit 2 hier nicht auftritt, weil eben diese Lagereinheit 2 nicht über den Radius geschwenkt wird, sondern dazu parallelorientiert. Die Relativbewegung an dem Radius ist dadurch erheblich geringer als bei den aus dem Stand der Technik bekannten Lösungen, wo der Transport der Lagereinheit 2 an der Transportbahn 1 eben fest und damit im Winkel zu dieser erfolgt, so daß im äußeren Radiusbereich eine wesentlich höhere Relativgeschwindigkeit beim Umlaufen existiert als im inneren Bereich. Dies wird durch die Lösung nach der Erfindung jetzt behoben. In der Darstellung ist weiter ersichtlich, daß es möglich ist, mehrere Lagersysteme nach der Erfindung nebeneinander anzuordnen. In gleicher Weise ist es selbstverständlich auch vorgesehen, feste Lagereinheiten, welche keine beweglichen Zuführsysteme aufweisen, mit dem erfindungsgemäßen Lagersystem zu koppeln bzw. zu verbinden.

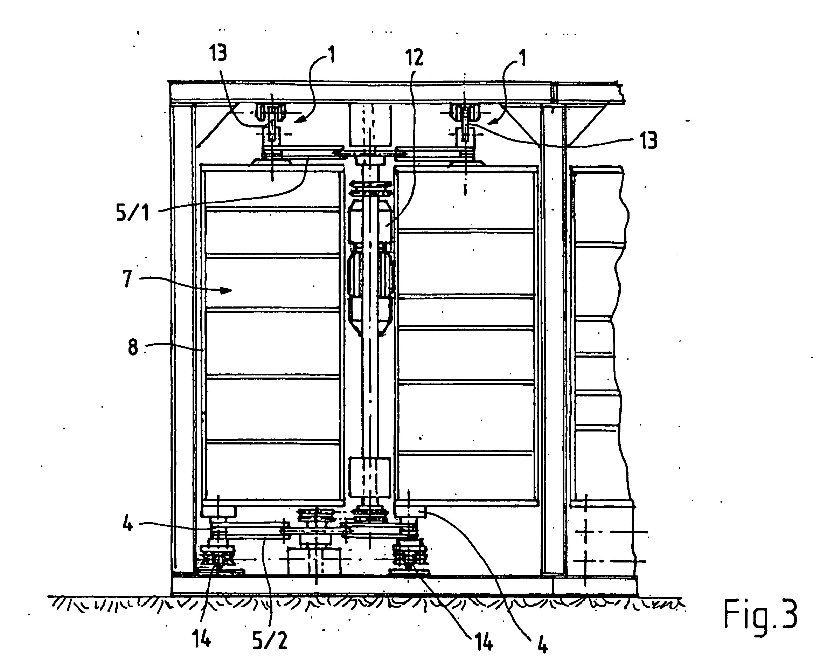

Die Fig. 3 zeigt eine Vorderansicht eines Lagersystems nach der Erfindung und nach der Fig. 1. Die Bezugszeichen, welche bereits vorgestelt wurden, werden in gleicher Weise wieder verwendet. Bezüglich der Vorderansicht ist festzuhalten, daß hierbei die parallel Anordnung von Transportbahn 1 und Lenkführung 4 sehr gut ersichtlich ist. Zwischen der Transportbahn 1 und der Lenkführung 4 ist dabei ein Regalfeld 7 angeordnet. Das Regalfeld 7 ist dabei wiederum den bereits beschriebenen Rahmen 8 umfaßt. Zwischen den beiden Seiten des Lagersys-tems ist der Antrieb 12 angeordnet, welcher sowohl die Transportbahn als auch die Lenkführung 4 antreibt. Mit dem Bezugszeichen 14 ist dabei im unteren Bereich, zusätzlich zu den anderen Ausführungen, eine Leitschiene 14 bezeichnet. Das Regalfeld 7 wird wieder transportiert und geführt mit Hilfe der Lenkschwingen 5/1, welche die Transportbahn 1 mit dem Regalfeld 7 verbinden und durch die Lenkschwingen 5/2, welche zwischen der Transportbahn 1 und dem Regalfeld 7 ebenfalls angeordnet ist. Das Bezugszeichen 13 bezeichnet ein nicht näher beschriebenes Antriebselement. Dieses kann als Kette, Seilführung, Zahnriemen, Zahnkette oder als Gummiaugenkette oder dergleichen ausgebildet sein. Die Erfindung ist dabei in keinster Weise beschränkt.

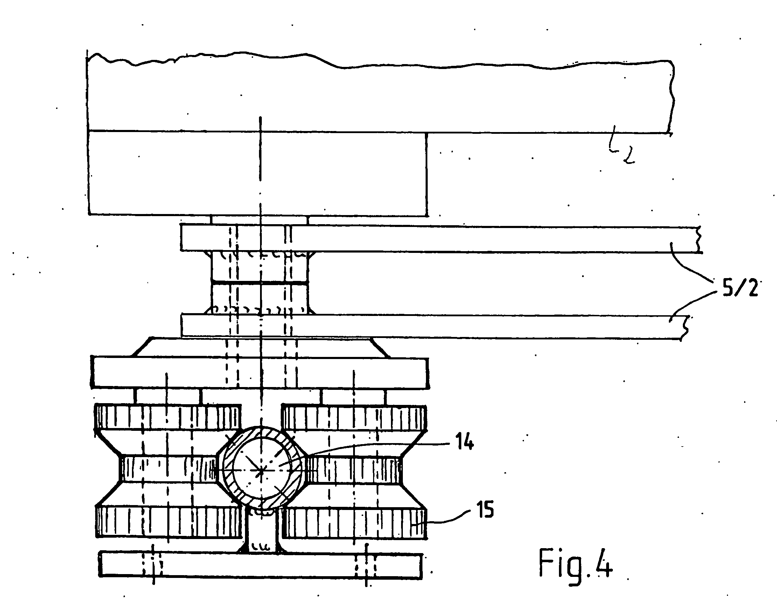

Die Fig. 4 zeigt ein Detail einer Ausführung der Lenkführung. Die Lenkführung ist dabei insbesondere gebildet durch die Leitschiene 14. Die Leitschiene 14 führt dabei Führungsrollen 15, welche entweder an der Lagereinheit 2 bzw. im unteren Bereich des Regalfeldes 7 angeordnet sind. Mit dem Bezugszeichen 5/2 sind die Lenkschwingen bezeichnet, die die Lagereinheit 2 bzw. das Regalfeld 7 im unteren Bereich führen.

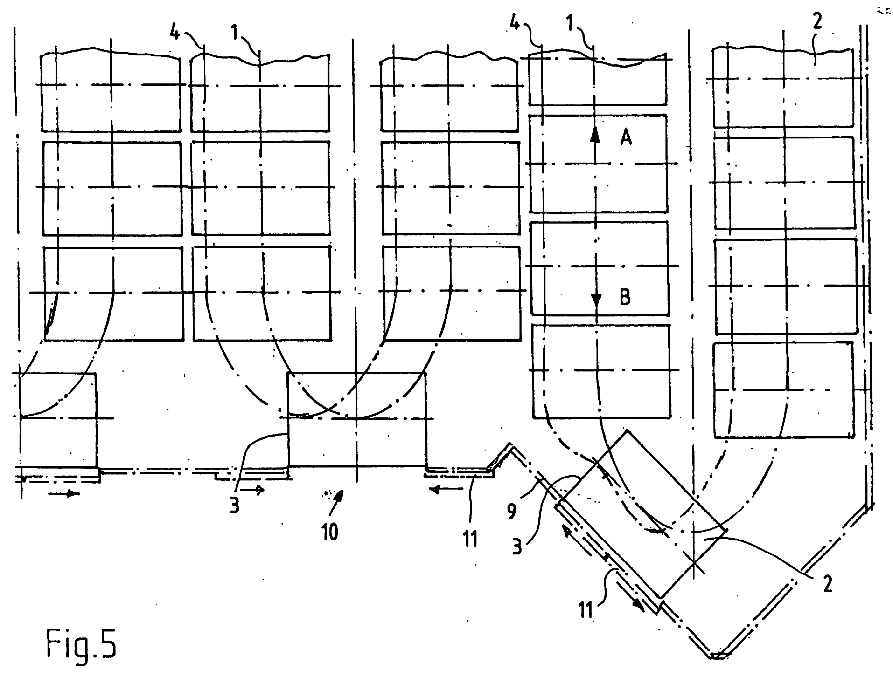

Die Fig. 5 zeigt eine schematische Darstellung der parallelen Anordnung mehrerer Lagersysteme nach der Erfindung. Es sind hierbei insgesamt drei derartige Lagersysteme dargestellt. Dabei ist in der rechten Darstellung mit dem Bezugszeichen A und B angegeben, daß ein Reversierbetrieb möglich ist. Durch diesen Reversierbetrieb ist es gegeben, daß immer der kürzeste Weg für die Lagereinheit zu der Bedienöffnung bzw. zu dem Lagerort gewählt werden kann. Das Bezugszeichen 1 bezeichnet auch in dieser Darstellung die Transportbahn. Die Lenkführung ist wieder mit dem Bezugszeichen 4 bezeichnet und das Bezugszeichen 2 bezeichnet die Lagereinheit. Die Bedienöffnung 10 ist auf dem links abgebildeten Lagersystem parallelorientiert, während sie in dem rechten Lagersystem schrägorientiert ist. Der Bedien- bzw. Zugriffsbereich 3 ist dabei unterschiedlich gestaltet. Der besondere Vorteil der Gestaltung des Bedien- bzw. Zugriffsbereiches in einer einmal parallelen und einmal schräg orientierten Anordnung liegt in einer besonderen Erhöhung des Bedienkomforts. Dies ist als Hauptvorteil dieser Anordnung zu betrachten.

Die Lenkführung ist dabei in einer geschwungenen Linie geführt, so daß die schräge Anordnung der Lagereinheit 2 in dem Bedienbereich bzw. an der Bedienöffnung 10 ermöglicht ist. Die Schutzverkleidung ist wiederum mit dem Bezugszeichen 9 bezeichnet. Das Bezugszeichen 11 bezeichnet die Sicherheitstür, welche beispielsweise als Schiebetür ausgeführt ist. Ersichtlich ist auch ein weiterer Vorteil der Erfindung, wonach ein geringerer Platzbedarf benötigt wird. Ist bereits eine Lagerhalle vorhanden, die in der Form ähnlich der Darstellung auf der rechten Seite entspricht, dann kann es beispielsweise erforderlich sein, eine Ausführungsform wie dargestellt zu wählen, um diesen Platz optimal ausnutzen zu können.

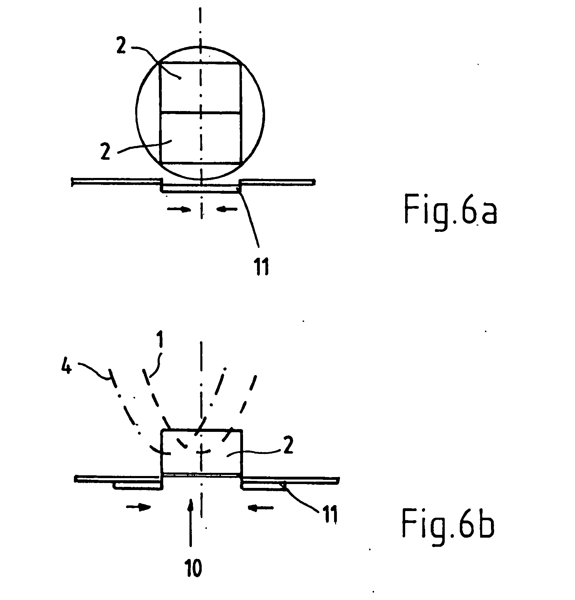

Die Fig. 6a und 6b zeigen ein Detail der Ausbildung der Bedienöffnung nach dem Stand der Technik und nach der Erfindung. Nach dem Stand der Technik ist klar, daß der Bedienbereich bzw. der Bereich in der Bedienöffnung 10 durch die nach dem Stand der Technik geführten Lagereinheiten 2 nicht erreicht werden kann. Es bleibt ein gewisser Abstand, welcher mit dem Kreis dargestellt ist, vorhanden, um eine Dreh- bzw. Schwenkbewegung der Lagereinheiten 2 in dem Zugriffsbereich zu ermöglichen. Dies hat zur Folge, daß ein erhöhter Platzbedarf nach dem Stand der Technik vorhanden ist. Insbesondere wird jedoch deutlich, daß die Bedienperson nicht direkt an die Lagereinheit 2 herankommt, ohne in den Zugriffsbereich einzutreten. Dies bringt auch sicherheitstechnische Probleme mit sich. Es sind dazu beispielsweise gesonderte Sicherungseinrichtungen vorzusehen, die ein Betreten erst ermöglichen, wenn die Lagereinheit 2 richtigt für eine Kommissionierung positioniert ist.

Demgegenüber ist in der Fig. 6b ersichtlich, daß der äußere Radius der Lagereinheit 2 im gebogenen Transportbahnbereich bzw. im Zugriffsbereich 3 so gewählt ist, daß in der Bedienstellung der Abstand der zur Schutzverkleidung 9 weisenden Seite der Lagereinheit 2 und der Schutzverkleidung 9 nahe oder gleich 0 ist. Damit werden die sicherheitstechnischen Probleme aus dem Stand der Technik vermieden. Die Zugriffsfreundlichkeit zu den Lagereinheiten 2 wird insgesamt erhöht. Die Bedienzeiten können durch die erfindungsgemäße Ausführung ebenfalls erheblich reduziert werden.

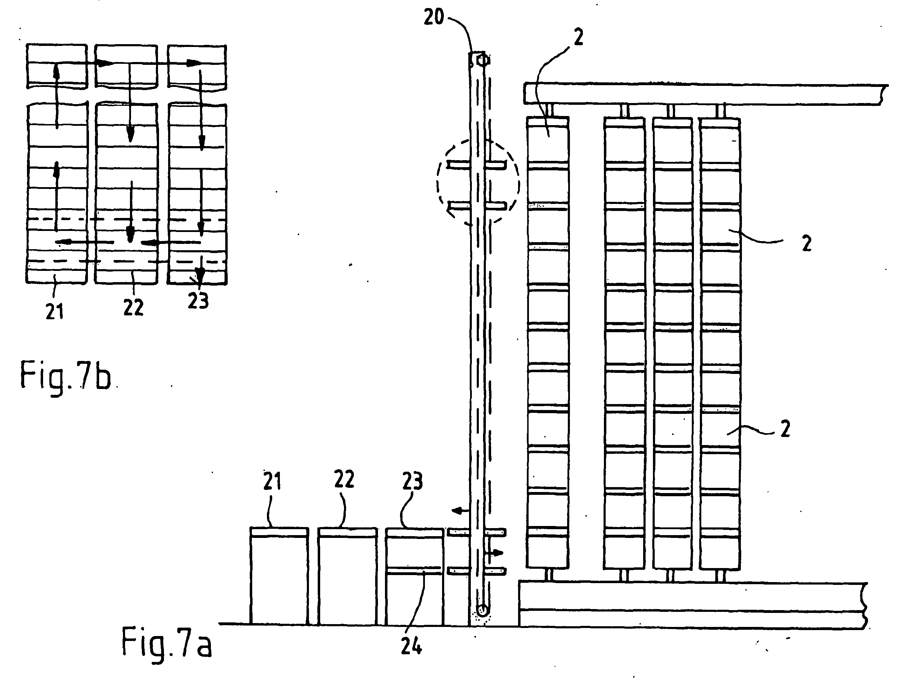

Die Figuren 7a und 7b zeigen die Kombination eines Lagersystems nach der Erfindung mit einem Vertikal-Regal-Bediengerät 20. Durch die Anordnung eines derartigen Vertikal-Regal-Bediengerätes an dem erfindungsgemäßen Lagersystem ist ein gleichzeitiges Ablegen und Herausnehmen des Lagergutes möglich. Das Vertikal-Regal-Bediengerät 20 ist dabei in der Höhe verstellbar und kann beispielsweise gleichzeitig zwei Lagereinheiten 2 des erfindungsgemäßen Lagersystems bedienen. Es ist selbstverständlich auch möglich, daß mehrere Lagereinheiten 2 mittels des Vertikal-Regal-Bediengerätes 20 versorgt werden. Damit wird die Effizienz des gesamten Lagersystems wesentlich erhöht. Dies ist insbesondere dadurch angegeben, daß die Kommissionierung der Lagerware erleichtert wird. Auch ist mit der Kombination des Vertikal-Regal-Bediengerätes 20 mit dem Lagersystem nach der Erfindung eine weitere Zeitersparnis für die Bedienpersonen und für den Lagervorgang insgesamt gegeben. Mit den Bezugszeichen 21 bis 24 sind Transportbahnen bezeichnet, die untereinander verknüpft sind, so daß beispielsweise die durch die Pfeile angegebenen Transportrichtungen für das Lagergut, beispielsweise zum Beschicken bzw. zum Entnehmen des Lagergutes, realisiert werden können. An dem Vertikal-Regal-Bediengerät 20 ist ebenfalls mit Pfeilen angedeutet, in welche Richtungen das Lagergut in die bzw. aus den Lagereinheiten 2 transportiert werden kann. Die untere Stellung zeigt dabei die Verbindungsmöglichkeit zu den Transportbahnen 21 bis 24 und die obere Stellung an dem Vertikal-Regal-Bediengerät, welche durch einen gestrichelten Kreis gekennzeichnet ist, bezeichnet die obere Stellung für die Bedienung der oberen Lagereinheiten 2.

Alle oben beschriebenen Eigenschaften und Vorteile führen im Vergleich zu den bisher bekannten Systemen zur Reduzierung der Kommissionierzeiten und im gleichen Maße zur Reduzierung der Kosten. Anders ausgedrückt ist aber auch bei gleicher Tagesarbeitszeit mit der erfindungsgemäßen Lösung eine erheblich höhere Kommissionierleistung möglich.

## Patentansprüche

1. Lagersystem, bei welchem eine Mehrzahl von Lagereinheiten (2) auf einer zumindest U-förmig ausgebildeten oder teilweise beliebig gebogenen Transportbahn (1) durch einen Antrieb (12) beweglich angeordnet ist und die Lagereinheiten (2) jeweils zumindest entlang der geraden Transportbahnbereiche gleichartig parallel auf der Transportbahn (1) angeordnet sind und die Lagereinheiten (2) jeweils um im Wesentlichen rechtwinklig zur Transportbahn (1) orientierte Schwenkachsen drehbar sind, wobei während des Bewegens der Lagereinheit (2) in den gebogenen Transportbahnbereich die Lagereinheit (2) im Wesentlichen gleichartig parallel zu der anderen Lagereinheit (2) verbleibt und um die Schwenkachse der bewegten Lagereinheit (2) schwenkt, **dadurch gekennzeichnet, daß** eine Führungseinrichtung von wenigstens einer Lenkführung (4) gebildet ist, die Lenkführung (4) und die Transportbahn (1) im wesentlichen parallel zueinander angeordnet sind und eine Lenkführung auf dem gleichen Niveau vorgesehen ist.

2. Lagersystem nach Anspruch 1, **dadurch gekennzeichnet, daß** zumindest eine Führungseinrichtung vorgesehen ist, die im Zusammenwirken mit der Transportbahn (1) und an den Lagereinheiten (2) angeordneten Führungsmitteln im gebogenen Transportbahnbereich und/oder in einem Zugriffsbereich (3) die Lagereinheiten (2) ebenfalls parallel orientiert transportiert.

3. Lagersystem nach einem oder beiden der vorhergehenden Ansprüche, **dadurch gekennzeichnet, daß** die Führungseinrichtung aus wenigstens einer Lenkführung (4) und wenigstens einer an jeder der Lagereinheiten (2) und an der Transportbahn (1) gelenkig angeordneten Lenkschwinge (5) gebildet ist.

4. Lagersystem nach einem oder mehreren der vorhergehenden Ansprüche, **dadurch gekennzeichnet, daß** wenigstens je eine Lenkführung (4) oberhalb und unterhalb der Lagereinheiten (2) vorgesehen ist.

5. Lagersystem nach einem oder mehreren der Ansprüche 1, 3 und 4, **dadurch gekennzeichnet, daß** wenigstens zwei Lenkschwingen (5) je Lagereinheit (2) vorgesehen sind, die an der Transportbahn (1), insbesondere im gebogenen Transportbahnbereich, aufeinander zu- bzw. voneinander wegbewegbar sind und die an der Lagereinheit (2) eine gemeinsame Drehachse (6) besitzen.

6. Lagersystem nach einem oder mehreren der vorhergehenden Ansprüche, **dadurch gekennzeichnet, daß** die Lagereinheiten (2) an die Transportbahn (1) an- bzw. abkoppelbar ausgebildet sind und/oder die Lagereinheiten (2) und die Transportbahn (1) Schnittstellen zum Ein- bzw. Auskoppeln aufweisen.

7. Lagersystem nach einem oder mehreren der Ansprüche 1, 3 und 4, **dadurch gekennzeichnet, daß** die Lenkführung (4) und/oder die Transportbahn (1) als Transportführung insbesondere schienenartig ausgebildet ist und/oder Lenkschwingen (5) sowohl zwischen Transportbahn (1) und Lagereinheit (2) als auch zwischen Lenkführung (4) und Lagereinheit (2) angeordnet sind.

8. Lagersystem nach einem oder mehreren der Ansprüche 1, 3 und 4, **dadurch gekennzeichnet, daß** die Lenkführung (4) als Leitschiene (14) oder dergleichen ausgebildet ist und/oder mehrere Lagereinheiten (2) übereinander in einem Regalfeld (7) angeordnet sind und die Transportbahn (1) und die Führungseinrichtung zumindest an der oberen bzw. unteren Lagereinheit (2) des Regalfeldes (7) bzw. an dem Regalfeld (7) selbst angreifen und/oder das Regalfeld (7) einen Rahmen (8) umfasst, der mehrere Lagereinheiten (2) aufnimmt und welcher die Führungs- und Transportmittel aufweist, die mit der Transportbahn (1) und der Führungseinrichtung zusammenwirken.

9. Lagersystem nach einem oder mehreren der vorhergehenden Ansprüche, **dadurch gekennzeichnet, daß** das Lagersystem einen Zugriffsbereich (3) enhält, der mit einer Schutzverkleidung (9) versehen ist und/oder dass die Schutzverkleidung (9) eine Bedienöffnung (10) besitzt, die mittels einer Sicherungseinrichtung, beispielsweise einer Sicherheitstür (11), verschließbar ist.

10. Lagersystem nach Anspruch 9, **dadurch gekennzeichnet, daß** die Breite der Bedienöffnung (10) der Breite der Lagereinheit (2) entspricht und/oder die Bedienöffnung (10) im gebogenen Transportbahnbereich und/oder im Zugriffsbereich (3) parallel zu der Breite der Lagereinheiten (2) angeordnet ist und/oder der äußere Radius der Lagereinheit (2) im gebogenen Transportbahnbereich bzw. im Zugriffsbereich (3) so gewählt ist, daß in der Bedienstellung der Abstand der zur Schutzverkleidung (9) weisenden Seite der Lagereinheit (2) und der Schutzverkleidung nahe oder gleich Null ist und/oder die Lenkführung (4) im Zugriffsbereich (3) derart ausgebildet ist, daß eine winklige bzw. schräge Anordnung der Bedienöffnung (10) ermöglicht ist.

11. Lagersystem nach einem oder mehreren der vorhergehenden Ansprüche, **dadurch gekennzeichnet, daß** der Antrieb (12) über wenigstens ein Antriebselement (13) mit den Lagereinheiten (2) und/oder den Regalfeldern (7) verbunden ist und/oder das Antriebselement (13) als Kette, Seilzug, Zahnriemen, Zahnkette, Gummiaugenkette oder dergleichen ausgebildet ist und/oder der Antrieb (12) für einen Reversierbetrieb ausgebildet ist.

12. Lagersystem nach einem oder mehreren der vorhergehenden Ansprüche, **dadurch gekennzeichnet, daß** eine Steuerung vorgesehen ist, mittels derer der Antrieb (12) und/oder die Lagereinheit (2) steuerbar ist und/oder die Steuerung die Lage der Lagereinheiten (2) erkennt und beim Abrufen den jeweils kürzesten Weg zum Zugriffsbereich (3) bzw. zur Bedienöffnung (10) auswählt und/oder die Steuerung den Transportweg einer Lagereinheit (2) optimiert, bevor diese abgerufen bzw. bewegt wird.

13. Lagersystem nach Anspruch 12, **dadurch gekennzeichnet, daß** die Steuerung Schnittstellen zur Verbindung mit mindestens einem Lagerverwaltungsrechner und/oder einem gesteuerten Kommissioniersystem aufweist und/oder jeder Lagereinheit (2) wenigstens eine Kodierung, zum Beispiel ein Bar Code, zugeordnet ist, die von der steuerung erkannt wird.

14. Lagersystem, gebildet aus wenigstens zwei Transportbahnen nach einem oder mehreren der vorhergehenden Ansprüche.

15. Lagersystem nach Anspruch 14, **dadurch gekennzeichnet, daß** wenigstens ein Regal-Bediengerät, bevorzugt ein Vertikal-Regal-Bediengerät (20), insbesondere für das gleichzeitige Ablegen und Herausnehmen des Lagergutes, vorgesehen ist, welches mit wenigstens einer Transportbahn zusammenwirkt.

## Claims

1. Storing system where a number of storing units (2) is arranged on an at least U-shaped or an in any way partially curved conveying path (1) movably by a drive (12), and the storing units (2) are arranged each at least along the straight conveying path zones in the same way parallel on the conveying path (1), and the storing units (2) each can be rotated around turning axes orientated substantially rectangular to the conveying path (1), wherein during the movement of the storing unit (2) in the curved conveying path zone the storing unit (2) remains substantially identically parallel to the other storing unit (2), and turns around the turning axis of the moved storing unit (2), **characterised in that** a guiding device is formed by at least one steering guide (4), the steering guide (4) and the conveying path (1) are arranged substantially parallel to each other, and a steering guide is provided on the same level.

2. Storing system according to claim 1, **characterised in that** at least one guiding device is provided which in interaction with the conveying path (1) and guide means arranged on the storing units (2) in the curved conveying path zone and/or in an access zone (3) conveys the storing units (2) also orientated parallel.

3. Storing system according to one or both of the preceding claims, **characterised in that** the guiding device is formed by at least one steering guide (4) and at least one steering link (5) arranged flexibly at each of the storing units (2) and at the conveying path (1).

4. Storing system according to one or more of the preceding claims, **characterised in that** at least one steering guide (4) is provided above and one below the storing units (2).

5. Storing system according to one or more of the claims 1, 3 and 4, **characterised in that** at least two steering links (5) per storing unit (2) are provided which can be moved toward each other or away from each other at the conveying path (1), in particular in the curved conveying path zone, and which have a common rotational axis (6) at the storing unit (2).

6. Storing system according to one or more of the preceding claims, **characterised in that** the storing units (2) are designed in such a way that they can be engaged or disengaged, respectively, to the conveying path (1), and/or the storing units (2) and the conveying path (1) have intersections for engaging or disengaging, respectively.

7. Storing system according to one or more of the claims 1, 3 and 4, **characterised in that** the steering guide (4) and/or the conveying path (1) as conveying guide is designed in particular rail-like, and/or the steering links (5) are arranged between the conveying path (1) and the storing unit (2) as well as between the steering guide (4) and the storing unit (2).

8. Storing system according to one or more of the claims 1, 3 and 4, **characterised in that** the steering guide (4) is designed as guide rail (14) or the like, and/or several storing units (2) are arranged one above the other in a shelf section (7), and the conveying path (1) and the guiding device engage at least at the top or the bottom storing unit (2) of the shelf section (7), or at the shelf section (7) itself, and/or the shelf section (7) comprises a frame (8) which holds several storing units (2) and which has the guiding and conveying means which interact with the conveying path (1) and the guiding device.

9. Storing system according to one or more of the preceding claims, **characterised in that** the storing system contains an access zone (3) provided with a protection sheathing (9), and/or the protection sheathing (9) has an operating opening (10) which can be closed by means of a safety device, for example a safety door (11).

10. Storing system according to claim 9, **characterised in that** the width of the operating opening (10) corresponds with the width of the storing unit (2), and/or the operating opening (10) is arranged in the curved conveying path zone and/or in the access zone (3) parallel to the width of the storing units (2), and/or the exterior radius of the storing unit (2) in the curved conveying path zone or the access zone (3) is chosen in such a way that in the operating position the distance of the side facing the protection sheathing (9) and the protection sheathing is almost zero or zero, and/or the steering guide (4) in the access zone (3) is designed in such a way that an angled or inclined arrangement of the operating opening (10) is possible.

11. Storing system according to one or more of the preceding claims, **characterised in that** the drive (12) is connected with the storing units (2) and/or the shelf sections (7) via at least one drive element (13), and/or the drive element (13) is designed as chain, cable pull, toothed belt, ladder chain, rubber eye chain or the like, and/or the drive (12) is designed for reversing operation.

12. Storing system according to one or more of the preceding claims, **characterised in that** a control is provided by means of which the drive (12) and/or the storing unit (2) can be controlled, and/or the control recognises the position of the storing units (2), and selects, when called in, the respectively shortest way to the access zone (3) or the operating opening (10), respectively, and/or the control optimises the conveying way of a storing unit (2) before it is called in or moved.

13. Storing system according to claim 12, **characterised in that** the control has intersections for connecting with at least one store administration computer and/or a controlled commissioning system, and/or each storing unit (2) is assigned to a code, for example a bar code, which is recognised by the control.

14. Storing system formed by at least two conveying paths according to one or more of the preceding claims.

15. Storing system according to claim 14, **characterised in that** at least one shelf operating device, preferably a vertical shelf operating device (20) is provided in particular for simultaneous depositing and removing the stored goods which interacts with at least one conveying path.

## Revendications

1. Système d'étagères, ayant un grand nombre d'unités d'étagères (2) maintenu de façon mobile grâce à une commande (12) sur un convoyeur (1) qui, soit possède une forme de "U" soit est au moins partiellement courbé, les unités d'étagères (2) étant, à tout le moins dans les parties rectilignes d'avancement, maintenues parallèle, les unes aux autres et de Façon pivotable autour d'axes de rotation ayant une orientation approximativement perpendiculaire au convoyeur (1), les mouvements des unités d'étagères (2) au niveau de la partie courbée du convoyeur (1) étant effectués de sorte que les orientations des unités d'étagères restent approximativement parallèles pendant le pivotement, **caractérisé en ce qu'**il existe un dispositif de guidage consistant en au moins un rail de guidage (4) relativement parallèle au convoyeur (1) et situé au même niveau que celui-ci.

2. Système d'étagères selon la revendication 1, **caractérisé en ce qu'**au moins un dispositif de guidage est prévu, permettant de transporter en interaction avec le convoyeur (1) et des moyens de guidage situés au niveau des unités d'étagères (2), au niveau de la partie courbée du convoyeur et/ou au niveau d'une zone d'accès (3) des unités d'étagères selon une orientation maintenue parallèle.

3. Système d'étagères selon une ou deux des revendications précédentes, **caractérisé en ce que** le dispositif de guidage consiste en au moins un rail de guidage (4) et en au moins un levier de pivotement (5) fixé de Façon pivotante à chacune des unités d'étagères et également de Façon articulée au niveau du convoyeur (1).

4. Système d'étagères selon une ou plusieurs des revendications précédentes, **caractérisé en ce qu'**au moins un rail de guidage (4) est prévu sur le dessus comme sur le dessous des unités d'étagères (2).

5. Système d'étagères selon une ou plusieurs des revendications précédentes, **caractérisé en ce qu'**au moins deux leviers pivotants (5), prévus pour chacune des unités d'étagères (2) possèdent un axe de pivotement commun (6), fixé au niveau de l'étagère, et **en ce qu'**ils peuvent effectuer un mouvement relatif d'éloignement ou de rapprochement entre eux, en particulier au niveau de la partie courbée du convoyeur (1).

6. Système d'étagères selon une ou plusieurs des revendications précédentes, **caractérisé en ce que** les unités d'étagères (2) peuvent être mécaniquement couplées ou découplées du convoyeur (1) et/ou **en ce qu'**elles possèdent des interfaces pour le couplage ou le découplage.

7. Système d'étagères selon une ou plusieurs des revendications 1, 3 et 4, **caractérisé en ce que** le rail de guidage (4) et/ou le convoyeur (1) possède(nt) en particulier une sorte de rail pour guider le déplacement et/ou **en ce que** des leviers de pivotement (5) sont situés entre le convoyeur (1) et l'unité d'étagère (2) ainsi qu'entre le rail de guidage (4) et l'unité d'étagère (2).

8. Système d'étagères selon une ou plusieurs des revendications 1, 3 et 4, **caractérisé en ce que** le rail de guidage (4) possède une forme de languette de guidage (14) ou une forme similaire, et/ou **en ce que** plusieurs unités d'étagères (2) sont situées l'une au-dessus de l'autre dans une matrice d'étagères (7), **en ce que** le convoyeur (1) et le dispositif de guidage agissent directement au moins sur les unités d'étagères (2) supérieure et inférieure de la matrice d'étagères (7) ou sur la matrice même, et/ou **en ce que** la matrice d'étagères (7) comprend un cadre (8) renfermant plusieurs unités d'étagères (2) et des moyens de guidage et de transport interagissant avec le convoyeur (1) et le dispositif de guidage.

9. Système d'étagères selon une ou plusieurs des revendications précédentes, **caractérisé en ce que** le système d'étagères possède une zone d'accès (3) munie d'un cache de protection (9) et/ou **en ce que** le cache de protection (9) possède une ouverture d'accès (10) pouvant être fermée par un dispositif de sécurité, par exemple une porte de sécurité (11).

10. Système d'étagères selon la revendication 9, **caractérisé en ce que** la largeur de l'ouverture d'accès (10) correspond à la largeur des unités d'étagères et/ou **en ce que** l'ouverture d'accès (10) est située dans la partie courbée du convoyeur et/ou est parallèlement à la largeur des unités d'étagères (2) et/ou **en ce que** le rayon extérieur décrit par le mouvement de l'unité d'étagères (2) dans la partie courbée du convoyeur ou dans la zone d'accès (3) est ajusté de Façon à ce que, en position d'accès, la distance entre le cache de protection (9) et le ctté de l'unité d'étagères (2) le plus proche de ce cache soit très faible voire nulle, et/ou au **en ce que** le rail de guidage (4) situé au niveau de la zone d'accès (3) possède une forme permettant la mise en place d'une ouverture d'accès en biais.

11. Système d'étagères selon une ou plusieurs des revendications précédentes, **caractérisé en ce que** la commande (12) est liée aux unités d'étagères (2) et/ou à la matrice d'étagères (7) par au moins un élément de commande (13) et/ou **caractérisé en ce que** l'élément de commande (13) est une channe, un palan, une courroie dentée, une channe dentée, une courroie perforée ou tout autre dispositif similaire et/ou **en ce que** la commande (12) est également configurée pour une utilisation en sens inverse.

12. Système d'étagères selon une ou plusieurs des revendications précédentes, **caractérisé en ce qu'**un système de contrôle permet de contrôler la commande (12) et/ou l'unité d'étagères (2), et/ou **en ce qu'**il permet de saisir la position des unités d'étagères (2) et ainsi de choisir, au moment de la demande, le chemin le plus court vers la zone d'accès (3) ou vers l'ouverture d'accès (10) et/ou **en ce que** le système de contrôle optimise le déplacement des unités d'étagères (2) avant que celles-ci soient déplacées.

13. Système d'étagères selon la revendication 12, **caractérisé en ce que** le système de contrôle possède des interfaces pour une mise en raison avec un ordinateur de magasin et/ou avec un système d'approvisionnement et/ou **en ce que** chaque unité d'étagères (2) possède au moins un code, par exemple un code barre, reconnu par le système de contrôle.

14. Système d'étagères constituées par au moins deux convoyeurs selon une ou plusieurs des revendications précédentes.

15. Système d'étagères selon la revendication 14, **caractérisé en ce qu'**il existe un appareil d'asservissement des étagères, de préférence un appareil d'asservissement vertical (20), permettant en particulier de stocker et de déstocker simultanément des biens au niveau des étagères et interagissant avec un autre convoyeur de transport.
